# EUROPEAN PATENT APPLICATION

(11) **EP 2 006 211 A2**
(43) Date of publication of application: **24.12.2008**
(21) Application number: 08009780.1
(22) Date of filing: 29.05.2008
(51) Int. Cl.: B65D 43/02, A47J 36/06

(54) **Flexible sealed lid against atmospheric agents**

(30) Priority: 20.06.2007 IT TO20070440
(71) Applicant: Tosini, Giorgio, 24060 Credaro (BG) (IT)
(72) Inventor: Tosini, Giorgio, 24060 Credaro (BG) (IT)
(74) Representative: Garavelli, Paolo

(57) **Abstract**

A flexible lid (1) sealed against atmospheric agents is described, comprising a central portion (2) equipped with grip (4) and an external crown (3), capable of adapting to the edge of containers with different sizes, in which the external crown (3) is a segmented surface formed of a series of slanted bands (5) and a series of side walls (6), each slanted band (5) being spliced to two adjacent side walls (6). A process is further described for forming the seal against atmospheric agents inside a container for foodstuff through a flexible lid.

## Description

The present invention refers to a lid made of an elastic and flexible membrane, equipped with mechanical characteristics that allow it to obtain a high seal against atmospheric agents with respect to a container for foodstuff. The present invention further refers to a process for forming the seal against atmospheric agents inside a container for foodstuff through a flexible lid.

The prior art deals, in particular, with the flexible lid belonging to the category of kitchen tools and, in general, to containers or plastic products obtained by extrusion or from rolled sections, like those in the following classes of the EPC classification:
- kitchen equipment; coffee mills; spice mills; apparatus for making beverages (A47J);
- lids or covers for rigid or semi-rigid containers (B65D 43/00).

The known prior art deals, in particular, with a flexible lid, capable of changing its own shape from concave to convex due to the effect of an action of an operator that presses on an handle over the lid. Part of air located in the container goes out passing through the contact area between lid and container. A plunger effect results for the lid, which remains adhering to the container edge till an external perturbation allows air to reach foodstuff inside the container (as described, for example, in prior patent n. WO06073466 shown in enclosed FIG. 1).

The contact circumference between lid and container prevents an air exchange between internal container environment and outside, creating a temporary, but long protection of foodstuff, of the order of several hours during a day.

The gasket effect is the result of squashing deformable material along the contact area between lid, made of flexible material, and container, generically made of metal or very rigid material. The gasket effect efficiency improves when the lid material hardness decreases along the contact area. In fact, squashing of lid material along the contact area reduces the risk of passage of air molecules and other external agents towards the container interior.

It follows that a lid made of flexible material sealed against atmospheric agents must be soft, in order to guarantee the gasket effect; at the same time, it must have adequate hardness, to keep its own shape stable without sinking inside the container.

This physical contradiction, deformability and squashing on one hand, structural stiffness on the other hand, is functionally solved with a silicone-based flexible lid, having a medium-high hardness, formed of a segmented membrane, namely: a series of elastically spliced concentric bands capable of being deformed adhering to the internal container surface.

The idea of having to use a surface segmentation stems from the following prior patents: US 03187641 (shown in enclosed FIG. 2), US 05699717 (shown in enclosed FIG. 3), WO 08102108 (shown in enclosed FIG. 4), US 4375182 (shown in enclosed FIG. 5), in which a lid, a gasket, a joint, are formed of an undulated surface, a bellows, etc., able to elastically compensate relative movements, forces, etc.

In this case, it is a silicone-based flexible lid with very high Shore hardness, formed of an elastic membrane with a medium thickness included between about 1 mm and 3 mm, equipped with a series of elastically spliced concentric bands capable to confer a broken shape to the lid, adhering to the internal edge of a rigid container by means of the surface of one of said concentric bands.

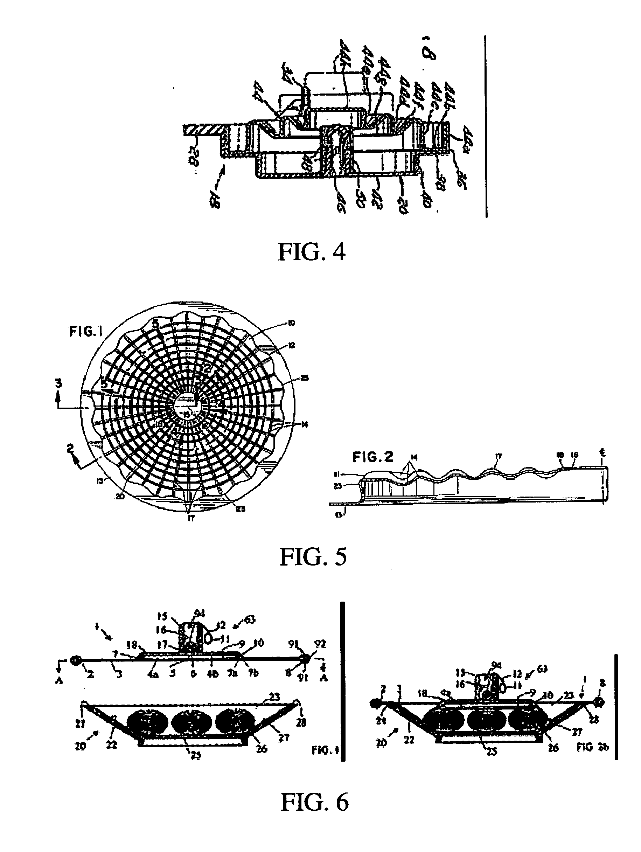

The ideal solution of a flexible sealed lid is represented by a lid perfectly adhering to the internal container surface and in contact with foodstuff to be protected, preventing an even minimum presence of air in contact with foodstuff. This ideal solution, however, implies the use of an elastic membrane with a very thin thickness, of the order of some centi-millimeter, delimited by an external rigid edge, a ring, as disclosed in document US 26032852 shown in enclosed FIG. 6. Moreover, an external pump must be used for forming the necessary vacuum to adhere the membrane to the internal container surface and to foodstuffs. Therefore, the ideal solution, from the practical point of view, has a series of problems for which it is preferred to use the below described solution.

Object of the present invention therefore is solving the above prior art problems by providing a silicone-based flexible lid with a very high hardness and with a medium thickness of about 1 - 3 millimetres, equipped with a series of elastically splinted concentric bands, having a width of about 14 - 20 millimetres, forming a corrugated, undulated surface, each band being capable of adapting to the container shape by adhering to the internal container surface under the action of external pressure.

Another object of the present invention is providing a process for forming the seal to atmospheric agents inside a container for foodstuff through a flexible lid.

The above and other objects and advantages of the invention, as will appear from the following description, are obtained with a flexible lid as described in claim 1.

Moreover, the above and other objects and advantages of the invention are obtained with a process for forming the seal to atmospheric agents inside a container for foodstuff through a flexible lid as described in claim 16. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

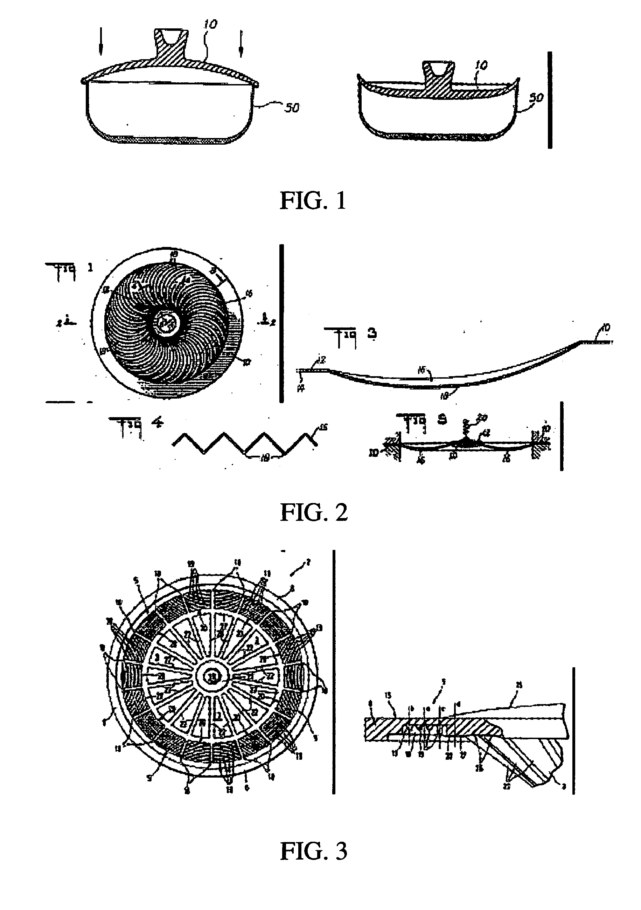

- FIG. 1 to 5 show some embodiments according to the known prior art of joints, gaskets, covers composed of corrugated surfaces, bellows, etc.;
- FIG. 6 shows an embodiment according to the prior art dealing with the ideal solution of a lid in contact with foodstuff to be protected;

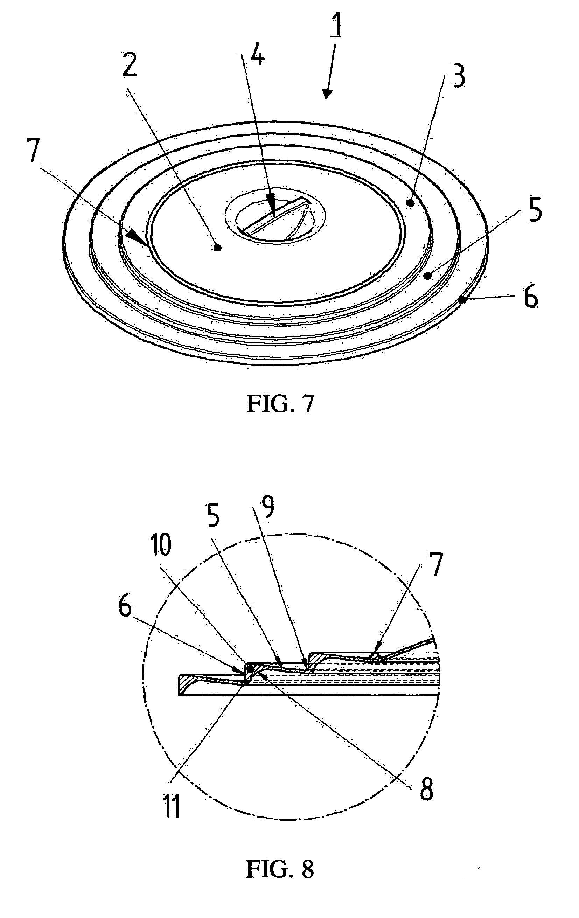

- FIG. 7 to 9 show axonometric, part and front views of a lid segmented with bands with right-angle saw teeth according to the present invention;

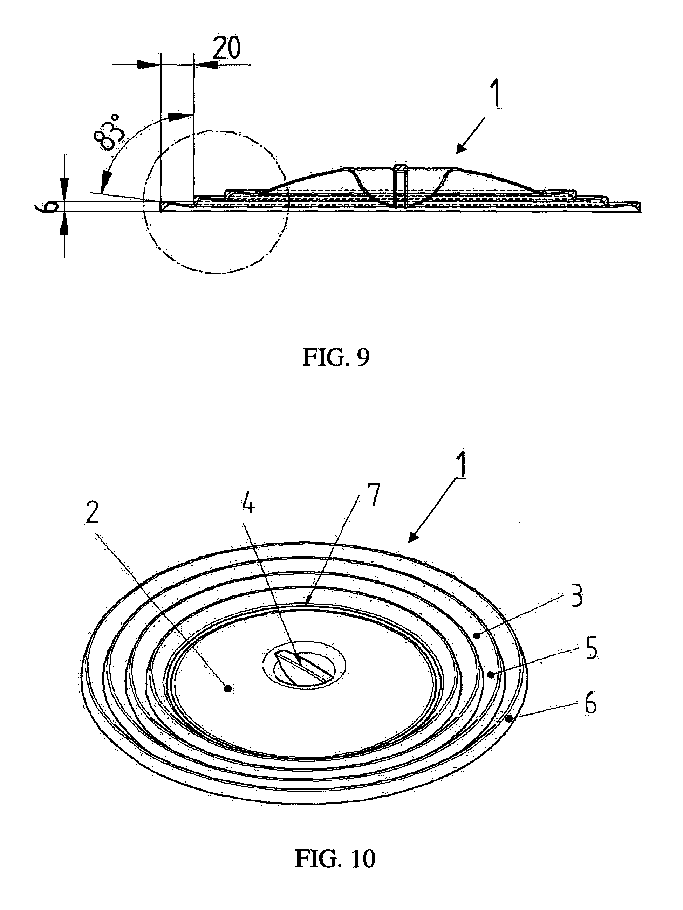

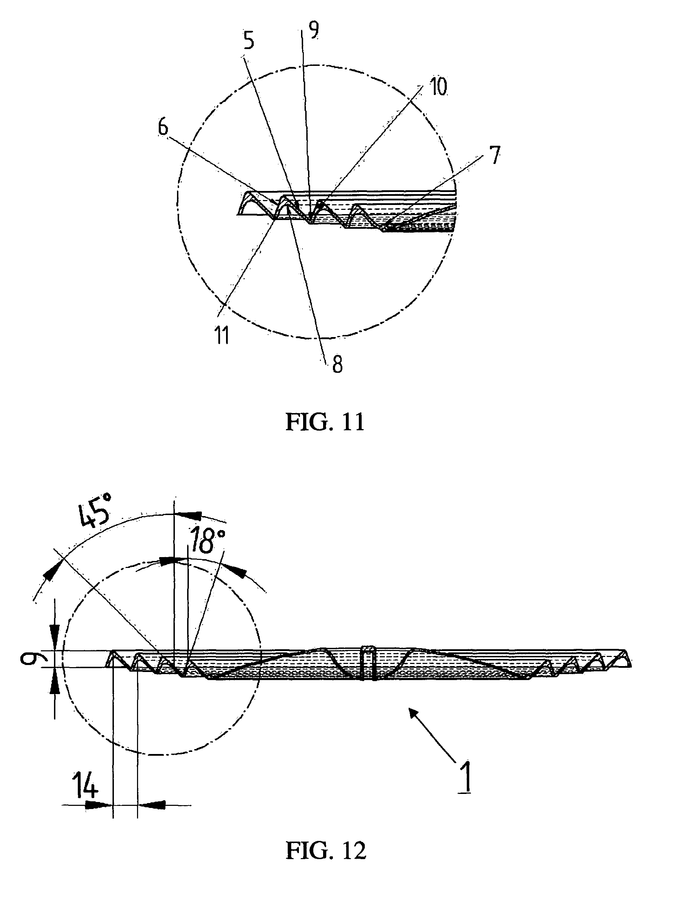

- FIG. 10 to 12 show axonometric, part and front views of a lid segmented with bands with obtuse-angle saw teeth according to the present invention;

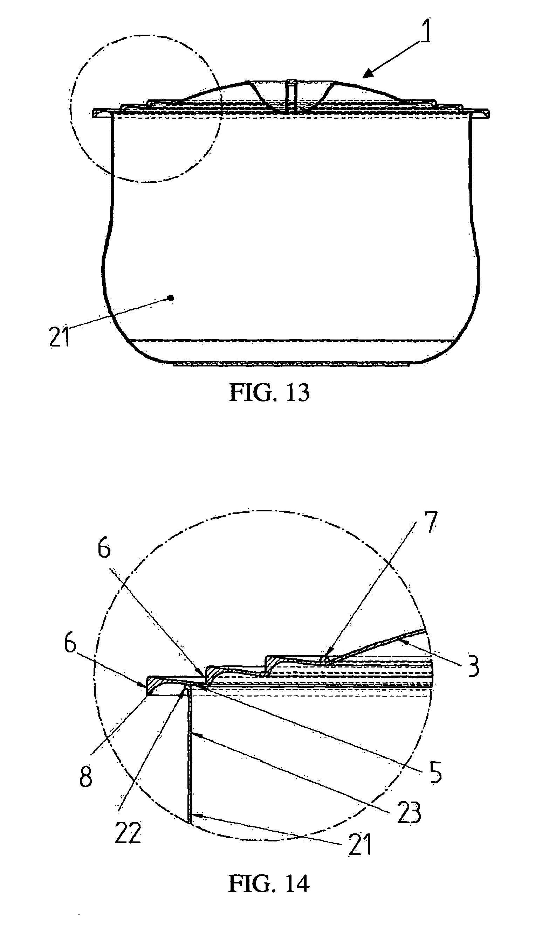

- FIG. 13 and 14 show a front sectional view and a particular view of the lid/container assembly in the configuration that precedes the sealing step against atmospheric agents of the process according to the present invention; and

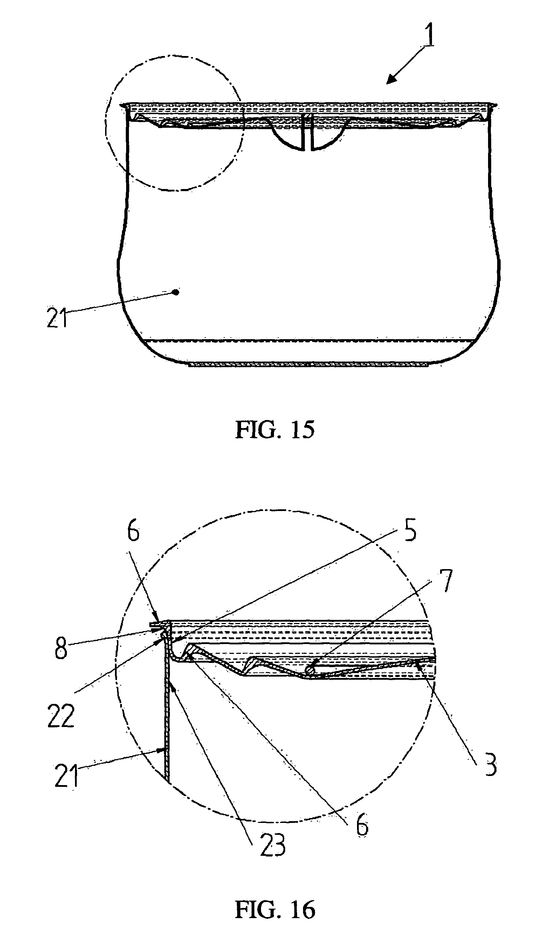

- FIG. 15 and 16 show a front sectional view and a particular view of the lid/container assembly in the configuration during the sealing step against atmospheric agents of the process according to the present invention.

A flexible lid 1, of the symmetric axial type, substantially comprises a central spherical cap 2 and a circular crown 3. The circular crown 3 is of such size as to cover the range of most widely used kitchen containers, usually having a diameter included between 180 and 300 millimetres.

A grip or handle 4 is directly obtained from the spherical cap 2 or is an additional element applied to the spherical cap 2 through connection elements of the screw or undercut dap (not shown).

The circular crown 3 is formed of a series of concentric bands 5 whose width is preferably included between 10 and 20 millimetres, with an inclination preferably included between 60° and 80° with respect to the vertical line, alternated to a series of concentric side walls 6 whose width is preferably included between 5 and 10 millimetres, with an inclination preferably included between 0° and -20° with respect to the vertical line.

The thickness of the membrane composing the circular crown 3 is arranged in order to create:
- a rigid node 10 next to the external edge of each concentric band 5;
- an elastic hinge 11 next to the internal edge of each concentric band 5.

For such purpose, the rigid node 10 is obtained by fitting the intrados surface of each band 5 with the intrados surface of each side wall 6 through a fitting 8 with a wide radius, preferably equal to about 4 millimetres; The elastic hinge 11 is obtained by leaving the corner 9 without fitting on its extrados surface.

The structure comprising rigid nodes 10 alternated with elastic hinges 11 is deformed, under the action of an external force, a field, due to the effect of the relative rotation of the hinges 11 only. A reduced deformation of the lid follows, which does not sink inside the container, but is kept within acceptable deformation values.

A projecting edge 7 separates the spherical cap 2 from the circular crown 3. The projecting edge 7 contains the cap 2 expansion under the action of an external pressure induced by the force applied to the grip 4 or the atmospheric pressure pressing onto the extrados surface of the lid 1.

For such purpose, the projecting edge 7 contributes to keep the extrados surface convexity of the spherical cap 2, whose convexity inversion would reduce the necessary elastic reaction contrasting the external pressure.

The present invention further refers to a process for forming the seal against atmospheric agents inside a container 21 for foodstuffs through a flexible lid 1 like the previously described one. In particular, with reference to Figures 13 to 16, such process comprises the following steps:
a) (FIG. 13 and FIG. 14) the lid is abutted against the upper edge 22 of a rigid container 21. In this configuration, there is no protection against atmospheric agents;
b) (FIG. 15 and FIG. 16) the operator, by pressing on grip 4 of the lid 1, pushes the lid 1 towards the container 21 bottom. The generic band 5, that is in contact with the edge 22 of the container 21, slides along the surface of the edge 22 till it establishes the contact of the lid fitting 8 with the container edge 22. Due to the squashing effect of the lid 1, a portion of air contained inside the container flows through the gasket formed between the band 5 of the lid 1 and the wall 23 of the container 21. The lid is arranged according to a catenary curve, subtended along the fitting 8, pressing against the edge 22 of the container. The band 5, adjacent to the edge 22 of the container, mostly adheres against the section of internal wall 23 of the container 21 due to the resiliency of the elastic hinges 11. Due to the squashing effect of the lid 1 and the change of its shape, a portion of air contained inside the container flows through the gasket formed between the band 5 of the lid 1 and the wall 23 of the container 21;
c) the operator leaves the grip 4. The spherical cap 2 tends to recover the original shape under the external pressure contrast. This elastic recovery is contrasted by the partial vacuum created in consequence of the air portion flown through the gasket formed by the contact between band 5 and wall 23. The system formed of lid and container is balanced under the elastic action of the spherical cap 2 and under the action of the external pressure over the partial vacuum created inside the container.

The flexible sealed lid 1 is preferably made in the shape of FIG. 10, 11 and 12, with the concentric bands 5 and the walls 6 forming a segmented surface shaped as obtuse-angle saw teeth. This configuration, in fact, makes it easier for the band 5 to slide, slanted by 45° with respect to the vertical line, along the edge 22 of the container 21 during the step of forming the seal between lid and container.

The consequent volume increase after choosing the obtuse-angle saw teeth configuration with respect to the right-angle solution as included in FIG. 7, 8 and 9, remains anyway reduced. In fact, a volume increase has been computed equal to:
- about 12% to pass from a conventional lid to a lid with right-angle saw teeth surface (FIG. 7, 8 and 9);
- about 17% to pass from a conventional lid to a lid with obtuse-angle saw teeth surface (FIG. 10, 11 and 12).

Both above described shapes solve the physical contradiction, described at the beginning of this description, dealing with the need of using a flexible material with very high hardness and at the same time having to guarantee an efficient contact area between lid band 5 and internal container surface 23.

The configuration with saw teeth surface with rigid nodes 10 alternated with elastic hinges 11 allows the lid to assume a catenary shape with controlled sizes, avoiding sinking inside the container both during the manual pressure step and during the vacuum permanence step.

The flexible lid 1 is preferably made of an elastic deformable material, of the type known in the foodstuff field according to the directives in force. In particular, reference is made to thermoplastic material, silicone, elastomer; in detail: platinum silicone, particularly suitable for freezing at -50°C and cooking at 300°C; peroxide silicone; elastomer adapted for cooking at 300°C and freezing at -50°C.

Thermoplastic material or elastomers, suitably treated in the vulcanising step (dynamic vulcanising), capable of capturing and keeping air with the result of obtaining a lightweight and insulating structure, allow realising a flexible lid 1 with better insulating and lightweight characteristics.

Thermoplastic material or elastomers, worked in a slab and suitably preformed and assembled with glass cloth, allow realising a flexible lid 1 with high mechanical characteristics of resistance to incision with cutting objects.

In another preferred embodiment, the flexible sealed lid according to the present invention comprises thermo-colouring pigments added to the deformable elastic material, suitable for indicating the temperature of the environment in which they are immersed or for indicating the temperature of the material with which they are in contact.

## Claims

1. Flexible lid (1) sealed against atmospheric agents comprising a central portion (2) equipped with grip (4) and an external crown (3), capable to be adapted to an edge of containers with different sizes, **characterised in that** said external crown (3) is a segmented surface formed of a series of slanted bands (5) and a series of side walls (6), each one of said slanted bands (5) being spliced to two adjacent side walls (6).

2. Flexible sealed lid according to claim 1, **characterised in that** each one of said slanted bands (5) is spliced to said adjacent side walls (6) respectively by means of a rigid node (10) and an elastic hinge (11).

3. Flexible sealed lid according to claim 2, **characterised in that** said rigid node (10) is obtained by fitting an intrados surface of each one of said bands (5) with an intrados surface of each one of said side walls (6) through a fitting (8).

4. Flexible sealed lid according to claim 2, **characterised in that** said elastic hinge (11) is obtained by leaving a corner (9) without fitting on an extrados surface.

5. Flexible sealed lid according to any one of the previous claims, **characterised in that** a projecting edge (7) separates said central portion (2) from said crown (3).

6. Flexible sealed lid according to any one of the previous claims, **characterised in that** it has an axial-symmetric shape.

7. Flexible sealed lid according to claim 6, **characterised in that** it has a medium thickness included between 1 and 3 millimetres, said slanted bands (5) having a width included between 10 and 20 millimetres, being slanted between 60° and 80° with respect to a vertical line, said side walls (6) having a width included between 5 and 10 millimetres, being slanted between 0° and -20° with respect to said vertical line.

8. Flexible sealed lid according to any one of the previous claims, **characterised in that** it is made of a deformable elastic material, preferably a thermoplastic material, or silicone, or platinum silicone or peroxide silicone, or an elastomer.

9. Flexible sealed lid according to any one of the previous claims, **characterised in that** said deformable elastic material is suitable for cooking at 300°C and freezing at -50°C.

10. Flexible sealed lid according to claim 8 or 9, **characterised in that** it comprises in said deformable elastic material thermo-colouring pigments, suitable to indicate the temperature of an environment in which they are immersed or for indicating the temperature of the material with which they are in contact.

11. Flexible sealed lid according to claim 8, 9 or 10, **characterised in that** said deformable elastic material is joined to glass cloth to obtain a composite structure resistant to incision with cutting objects.

12. Flexible sealed lid according to any one of the previous claims, **characterised in that** it is adapted to be subjected to a dynamic vulcanising treatment for capturing and keeping air for obtaining a lightweight and insulating structure.

13. Process for forming a seal against atmospheric agents inside a container (21) for foodstuff through a flexible lid (1) according to claims 1 to 12, **characterised in that** it comprises the step of pressing onto said grip (4) of said lid (1), said band (5) that is in contact with said edge (22) of said container (21) sliding along a surface of said edge (22) till a contact is established of said fitting (8) of said lid with said edge (22) of said container (21).

14. Process for forming a seal against atmospheric agents according to claim 13, **characterised in that** it comprises the step of recovering an original shape of said central portion (2) of said lid (1) under a contrast of an external pressure, a system formed of said lid (1) and said container (21) being balanced under an elastic action of said central portion (2) and under an action of said external pressure over a partial vacuum created inside said container (21).
